# EUROPÄISCHE PATENTSCHRIFT

(11) **EP 0 626 303 B1**
(45) Veröffentlichungstag und Bekanntmachung des Hinweises auf die Patenterteilung: **08.07.1998**
(21) Anmeldenummer: 94106269.7
(22) Anmeldetag: 22.04.1994
(51) Int. Cl.: B62D 5/08

(54) **Ventilanordnung**
Valve arrangement
Aménagement de soupape

(30) Priorität: 28.05.1993 DE 4317881
(43) Veröffentlichungstag der Anmeldung: 30.11.1994
(73) Patentinhaber: LuK Fahrzeug-Hydraulik GmbH & Co. KG, D-61352 Bad Homburg (DE)
(72) Erfinder: Körtge, Randolf, D-61250 Usingen (DE)
(74) Vertreter: Gleiss & Grosse

(56) Entgegenhaltungen:
- DE-A- 1 675 469
- US-A- 3 210 939
- US-A- 3 752 174

## Beschreibung

Die Erfindung betrifft eine Ventilanordnung für eine hydraulische Fördereinrichtung gemäß Oberbegriff des Anspruchs 1.

Ventilanordnungen der hier angesprochenen Art werden beispielsweise bei Lenkhilfpumpen verwendet. Sie weisen ein Stromregelventil sowie ein Druckbegrenzungsventil auf. Das Stromregelventil dient dazu, einem Verbraucher einen vorgegebenen Fluidstrom zuzuordnen. Beispielsweise werden Lenkhilfpumpen so eingestellt, daß dem Lenkgetriebe ein Fluidstrom von 8 l/min zugeführt wird. Das Druckbegrenzungsventil dient dazu, daß ein bestimmter Höchstdruck von beispielsweise 100 bar bis 110 bar im Lenksystem nicht überschritten wird.

Bei einer bekannten Ausführungsform einer derartigen Ventilanordnung sind das Stromregelventil und das Druckbegrenzungsventil unmittlbar miteinander gekoppelt, das heißt, einstückig ausgebildet. Dabei ist das Druckbegrenzungsventil in den Kolben des Stromregelventils eingebracht. Es hat sich dabei als nachteilig erwiesen, daß der Aufbau einer derartigen Ventilanordnung sehr aufwendig ist.

Weiterhin ist aus der US 3,210,939 eine Ventilanordnung nach dem Oberbegriff des Anspruchs 1 bekannt, die ein Stromregelventil und ein Druckbegrenzungsventil aufweist. Diese sind als zwei voneinander getrennte Komponenten ausgebildet, von denen das Stromregelventil in einem Gehäuse der Ventilanordnung und das Druckbegrenzungsventil in einer außerhalb des Gehäuses verlaufenden Hydraulikleitung angeordnet ist.

Aus der DE-OS 1 675 469 ist eine andere Ausführungsform der Ventilanordnung bekannt, bei der das Stromregelventil und das Druckbegrenzungsventil getrennt in dem Gehäuse der hydraulischen Fördereinrichtung beziehungsweise Lenkhilfpumpe untergebracht sind. Um die Funktion dieser Ventilanordnung zu gewährleisten, bedarf es der Einbringung von die beiden Ventile verbindenden Kanäle in das Gehäuse der hydraulischen Fördereinrichtung. Das heißt, auch eine derartige Realisierung zeichnet sich durch einen aufwendigen Aufbau aus.

Es ist demgegenüber Aufgabe der Erfindung, eine Ventilanordnung für eine hydraulische Fördereinrichtung zu schaffen, die sich durch einen einfachen Aufbau bei hoher Funktionssicherheit auszeichnet.

Diese Aufgabe wird bei einer Ventilanordnung gemäß Oberbegriff des Anspruchs 1 mit Hilfe der in diesem Anspruch wiedergegebenen Merkmale gelöst. Diese zeichnet sich dadurch aus, daß das Stromregelventil und das Druckbegrenzungsventil zwei getrennte Komponenten der Ventilanordnung darstellen, die in ein und derselben Ausnehmung im Gehäuse der hydraulischen Fördereinrichtung angeordnet sind, daß das Druckbegrenzungsventil über einen Durchgangskanal mit dem einem Verbraucher zugeführten Druck und letztlich auch mit einem ersten Druckraum verbunden ist, der der Druckseite der Fördereinrichtung zugeordnet ist, daß das Stromregelventil einen Kolben umfaßt, der einerseits mit dem Ausgangsdruck der hydraulischen Fördereinrichtung und andererseits mit dem dem Verbraucher zugeordneten Druck beaufschlagbar ist, und daß bei einer druckbedingten Verlagerung des Kolbens des Stromregelventils eine in Abhängigkeit vom Druck variable Verbindung zwischen dem ersten Druckraum und einem Kanal geschaffen wird, der zum Ansaugbereich der Fördereinrichtung führt und daß gleichzeitig der von der Fördereinrichtung geförderte Fluidstrom zum Verbraucher beziehungsweise zum Innenraum druckabhängig geregelt wird, und daß dabei der dem Verbraucher zugeführte Druck von dem Druckbegrenzungsventil überwacht wird. Hierdurch wird ein einfacher und damit kostengünstiger Aufbau der Ventilanordnung gewährleistet. Die beiden Ventile sind deshalb einfach aufgebaut, weil sie getrennt realisiert sind, also die verschiedenen Druckbereiche der Ventile verbindende Kanäle in ein und demselben Grundkörper entfallen. Andererseits sind die beiden Komponenten beziehungsweise Ventile der Ventilanordnung unmittelbar miteinander hydraulisch verbunden, weil sie in ein und derselben Ausnehmung im Gehäuse der Fördereinrichtung untergebracht sind. Der einfache Aufbau der Ventilanordnung gewährleistet auch eine hohe Funktionssicherheit.

Ein Ausführungsbeispiel der Ventilanordnung wird deshalb bevorzugt, weil die Ausnehmung im Gehäuse der hydraulischen Fördereinrichtung als Sackbohrung ausgebildet ist, also einfach realisiert werden kann. Im Grund der Bohrung ist das Druckbegrenzungsventil eingebracht. Diese nimmt im übrigen das Stromregelventil auf.

Desweiteren wird ein Ausführungsbeispiel der Ventilanordnung bevorzugt, bei der die Ausnehmung im Gehäuse der hydraulischen Fördereinrichtung als Durchgangsbohrung ausgebildet ist, also ebenfalls leicht realisiert werden kann. Die Durchgangsbohrung nimmt beide Komponenten der Ventilanordnung auf, von denen eine in einem die Durchgangsbohrung verschließenden Stopfen untergebracht sein kann.

Besonders bevorzugt wird ein Ausführungsbeispiel der Ventilanordnung, bei der das Druckbegrenzungsventil über einen Kanal mit der Druckseite der hydraulischen Fördereinrichtung verbunden ist, der das Stromregelventil durchdringt. Ein derartiger Aufbau zeichnet sich dadurch aus, daß zusätzliche Kanäle im Gehäuse der hydraulischen Fördereinrichtung entfallen können, die der hydraulischen Anbindung des Druckbegrenzungsventils dienen. Die Herstellung einer Ventilanordnung dieser Art ist daher besonders kostengünstig.

Weitere Ausgestaltungen der Ventilanordnung ergeben sich aus den übrigen Unteransprüchen.

Die Erfindung wird im folgenden anhand der Zeichnung näher erläutert. Es zeigen:
- Figur 1: ein erstes Ausführungsbeispiel einer Ventilanordnung im Längsschnitt und
- Figur 2: einen Längsschnitt durch ein zweites Ausführungsbeispiel einer Ventilanordnung.

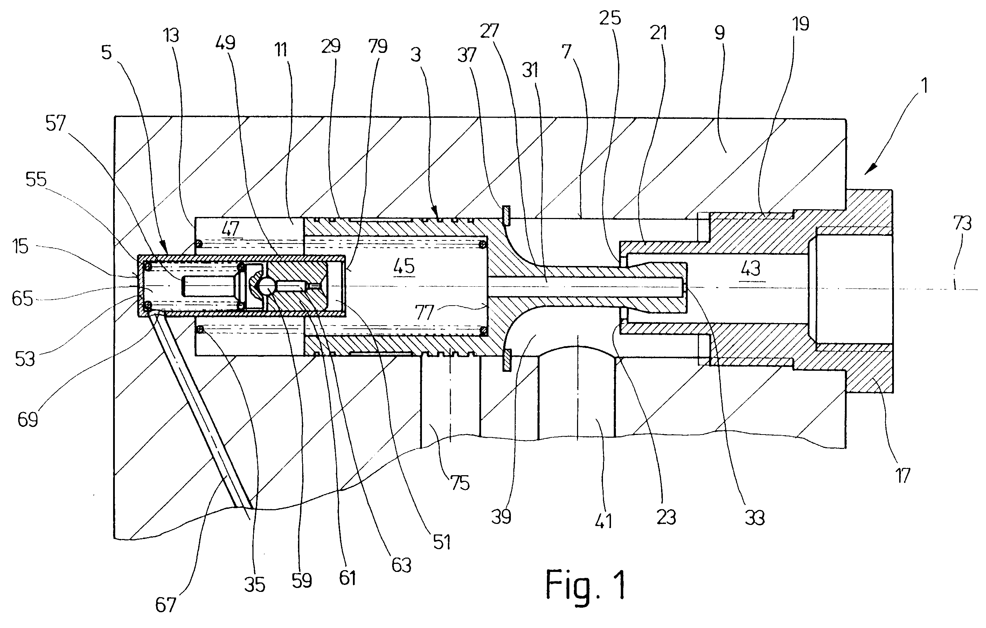

Die in Figur 1 in Längsschnitt dargestellte Ventilanordnung 1 umfaßt ein Stromregelventil 3 sowie ein Druckbegrenzungsventil 5. Beide Komponenten der Ventilanordnung 1 sind in ein und derselben Ausnehmung 7 untergebracht, die in das Gehäuse 9 einer hydraulischen Fördereinrichtung eingebracht ist. Im folgenden wird beispielhaft unterstellt, daß es sich hier um eine Lenkhilfpumpe für ein Kraftfahrzeug handelt. Es ist jedoch davon auszugehen, daß Ventilanordnungen der hier genannten Art bei beliebigen Hydraulikmaschinen, also Pumpen oder Motoren, einsetzbar sind.

Die Ausnehmung 7 ist hier durch eine einseitig offene Bohrung 11 realisiert, also durch eine Sackbohrung. In den Grund 13 der Bohrung 11 ist eine Vertiefung 15 eingebracht, die das Druckbegrenzungsventil 5 aufnimmt.

Die Öffnung der Bohrung 11 ist durch einen Anschlußstopfen 17 abgeschlossen, der auf geeignete Weise in die Bohrung 11 eingebracht ist, beispielsweise durch ein Gewinde 19. Der Anschlußstopfen weist einen in das Innere der Ausnehmung 7 reichenden Vorsprung 21 auf, der beispielsweise zylindrisch ausgebildet sein kann. In den Boden 23 des Vorsprungs ist eine Öffnung 25 eingebracht, durch die ein hier konzentrisch zum Vorsprung 21 ausgebildeter Dorn 27 in das Innere des Vorsprungs 21 ragt, der von dem Grundkörper eines Kolbens 29 des Stromregelventils 3 entspringt.

Der Dorn 27 weist einen Durchgangskanal 31 auf, der in einer Blende 33 mit definiertem Querschnitt mündet, der hier kleiner ist als der Querschnitt des Durchgangskanals 31. Diese öffnet sich im Inneren des Vorsprungs 21.

Der Kolben 29 wird von einem elastischen Element, das hier beispielsweise als Schraubenfeder 35 ausgebildet ist, mit einer Vorspannkraft beaufschlagt, die diesen von links nach rechts gegen einen Anschlag 37 drückt. Dieser ist hier beispielsweise durch einen in eine Nut eingesetzten Sprengring realisiert, der in das Innere der Ausnehmung 7 beziehungsweise der Bohrung 11 ragt. Der Kolben 29 kann hohl ausgebildet sein, so daß die Schraubenfeder 35 in dessen Inneres hineinragt und sich am Grund des hohlen Kolbens 29 einerseits und am Grund 13 der Bohrung 11 andererseits abstützt.

Der Außendurchmesser des Dorns 27 ist kleiner gewählt als der des übrigen Kolbens 29, so daß im Bereich des Dorns 27 ein erster Druckraum 39 gebildet wird, in den ein Kanal 41 mündet; dieser ist mit der Druck- beziehungsweise Förderseite der hydraulischen Fördereinrichtung beziehungsweise der Lenkhilfpumpe verbunden.

Der erste Druckraum 39 ist über die Öffnung 25 mit einem im Inneren des Anschlußstopfens 17 liegenden Innenraum 43 verbunden, der mit dem Verbraucher der hydraulischen Fördereinrichtung, hier also mit dem Lenkgetriebe des Kraftfahrzeugs verbunden ist. Von der Lenkhilfpumpe über den Kanal 41 in den ersten Druckraum 39 gelangendes Drucköl kann also durch die Öffnung 25 in den Innenraum 43 des Anschlußstopfens 17 und von dort zum Lenkgetriebe gelangen.

Der Dorn 27 ragt durch die Öffnung 25 bis in den Innenraum 43 des Anschlußstopfens 17, so daß der hier herrschende Druck über die Blende 33 und den Durchgangskanal 31 bis in den Hohlraum 45 des hohlen Kolbens 29 weitergeleitet wird. Da sich der Hohlraum 45 frei zu dem zwischen Kolben 29 und dem Grund 13 der Bohrung 11 zu einem zweiten Druckraum 47 öffnet, wird der im Innenraum 43 des Verschlußkolbens 17 herrschende Druck bis in den zweiten Druckraum 47 zwischen Kolben 29 und Grund 13 übertragen.

Das Druckbegrenzungsventil 5 weist einen hier beispielhaft zylindrisch ausgebildeten Grundkörper auf, der eine innen hohle Hülse 49 aufweist, die sich zum zweiten Druckraum 47 öffnet. Die Hülse 49 ist hier so lang ausgebildet, daß ihre Öffnung 51 im Hohlraum 45 des Kolbens 29 angeordnet ist. An dem der Öffnung 51 gegenüberliegenden Boden 53 stützt sich ein als Schraubenfeder 55 ausgebildetes Federorgan ab, das ein Widerlager 57 mit einer in Figur 1 von links nach rechts wirkenden Federkraft beaufschlagt. Das Widerlager drückt einen Verschlußkörper 59, der als Kegel oder, wie hier, als Kugel ausgebildet sein kann, gegen einen im Inneren der Hülse 49 angeordneten Verschlußstopfen 61, der mit einem Durchgangskanal 63 versehen ist. Der Verschlußkörper 59 kann sich unter Einwirkung der Schraubenfeder 55 dichtend gegen die Mündung des Durchgangskanals 63 anlegen, der an seinem dem Verschlußkörper gegenüberliegenden Ende sich zum Hohlraum 45 und damit auch zum zweiten Druckraum 47 öffnet.

Das Widerlager 57 ist im Inneren der Hülse 49 frei beweglich. Sein Außendurchmesser ist kleiner als der Innendurchmesser der Hülse 49, so daß gegebenenfalls durch den Durchgangskanal 63 in das Innere der Hülse 49 gelangendes Druckmedium das Widerlager 57 ohne weiteres umströmen kann.

In den Innenraum 65 der Hülse 49, der von dem Verschlußstopfen 61 abgeschlossen wird, mündet ein Kanal 67, der sich durch das Gehäuse 9 erstreckt und beispielsweise zu einem Tank oder der Ansaugseite der Fördereinrichtung führt. Der Innenraum 65 bildet also einen dritten Druckraum, der über eine Öffnung 69 mit dem Kanal 67 verbunden ist.

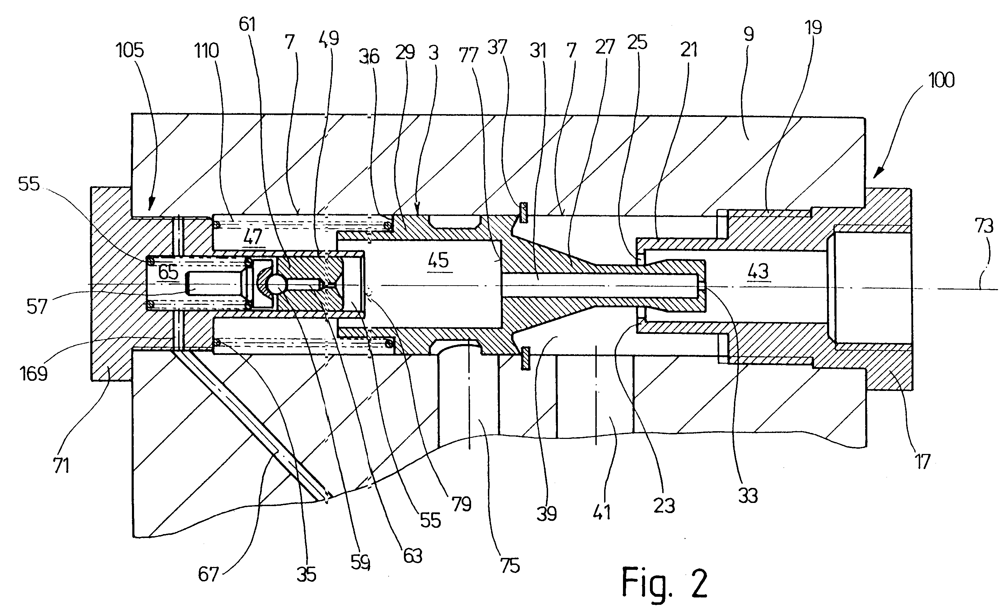

Die in Figur 2 im Längsschnitt wiedergegebene Ventilanordnung 100 ist grundsätzlich gleich aufgebaut, wie die anhand von Figur 1 erläuterte. Gleiche Teile sind mit gleichen Bezugsziffern versehen, so daß auf die Erläuterungen zu Figur 1 verwiesen werden kann.

Der Aufbau des Druckbegrenzungsventils 105 unterscheidet sich letztlich nur unwesentlich von dem des Druckbegrenzungsventils 5 gemäß Figur 1: Das Druckbegrenzungsventil 105 weist einen Grundkörper auf, der als Verschlußstopfen ausgebildet, der die hier als Durchgangsbohrung 110 ausgebildete Ausnehmung 7 auf ihrer linken Seite verschließt, während ihre rechte Seite von dem Anschlußstopfen 17 abgeschlossen wird, wie anhand von Figur 1 erläutert.

Die den Kolben 29 des Stromregelventils 3 mit einer von rechts nach links wirkenden Vorspannkraft beaufschlagende Schraubenfeder 35 stützt sich hier nicht am Grund der einseitig offenen Bohrung gemäß Figur 1 sonderen am Grundkörper des Verschlußstopfens 71 ab, so daß der Kolben 29 nach rechts gegen einen Anschlag 37 gedrängt wird, wie dies anhand von Figur 1 bereits erläutert wurde.

Ein konstruktiver Unterschied zwischen der Ventilanordnung 1 in Figur 1 und der Ventilanordnung 100 in Figur 2 liegt darin, daß die den Kolben 29 nach rechts gegen den Anschlag 37 drängende Schraubenfeder 35 bei dem Ausführungsbeispiel gemäß Figur 2 nicht im Hohlraum 45 verläuft, sondern außen an einer geeigneten Widerlagerschulter anliegt und so eine Druckkraft auf den Kolben 29 ausübt. In der Funktion ergeben sich dadurch keine Unterschiede gegenüber dem Ausführungsbeispiel in Figur 1.

Der Grundkörper des Druckbegrenzungsventils 105 setzt sich in einer Hülse 49 fort, die in den zweiten Druckraum 47 ragt und sich hier im Inneren des Kolbens 29, also in dessen Hohlraum 45 öffnet. Der im Inneren des Druckbegrenzungsventils 105 vorhandene dritte Druckraum 65 ist über eine hier als Stichkanal 169 ausgebildete Öffnung mit einem Kanal 67 verbunden, der beispielsweise zu einem Tank oder zur Ansaugseite der hydraulischen Fördereinrichtung beziehungsweise Lenkhilfpumpe führt.

Beiden in den Figuren 1 und 2 dargestellten Ausführungsbeispielen sind folgende Konstruktionsmerkmale gemeinsam:

Der die rechte Seite der Bohrung 11 beziehungsweise 110 abschließende Anschlußstopfen 17 ragt mit seinem Vorsprung 21 so weit in den ersten Druckraum 39 hinein, daß der in diesen ersten Druckraum mündende Kanal 41 in keiner Weise behindert wird. Der Durchmesser des den ersten Druckraum 39 in axialer Richtung, das heißt, in Richtung der in beiden Figuren gestrichelt eingezeichneten Mittelachse 73 verlaufenden Dorns ist so klein gewählt, daß zwischen dessen Außenfläche und der Innenfläche der Ausnehmung 7 ein ausreichend großer Raum bleibt, so daß durch den Kanal 41 in den ersten Druckraum 39 einströmendes Drucköl ungehindert durch die Öffnung 25 des Vorsprungs 21 in den Innenraum 43 gelangen kann. Der Dorn 27 ist so lang ausgebildet, daß auch in dem Fall, in dem der Kolben 29 des Stromregelventils 3 in seiner rechtesten Stellung, das heißt, am Anschlag 37 ruhend angeordnet ist, die Öffnung 25 durchdringt. In seinem rechten Endbereich weist die Außenfläche des Dorns 27 eine Kontur auf, das heißt, der Außendurchmesser des Dorns vergrößert sich von links nach rechts. Dabei ist der größte Außendurchmesser des Dorns kleiner als der größte Innendurchmesser der Öffnung 25. Wenn also der Kolben 29 des Stromregelventils 3 -wie unten noch genauer erläutert- sich entgegen der Druckkraft der Schraubenfeder 35 vom Anschlag 37 nach links bewegt, vergrößert sich der Außendurchmesser des die Öffnung 25 durchdringenden Dorns 27, so daß die freie Ringfläche zwischen Außenfläche des Dorns und Innenfläche der Öffnung 25 sich bei einer Verlagerung des Kolbens 29 nach links verkleinert. Das heißt, durch eine Verlagerung des Kolbens 29 des Stromregelventils 3 wird der zwischen Dorn 27 und Außenfläche der Öffnung 25 gegebene Freiraum verändert und zwar so, daß bei einer Verlagerung des Kolbens 29 aus der in den Figuren dargestellten Position eine Reduzierung der zwischen Dorn und Außenfläche der Öffnung 25 verbleibenden Ringfläche gegeben ist.

Der Anschlag 37 ist so angeordnet, daß auch unter Einwirkung der Schraubenfeder 35 der Kolben 29 nicht über den Mündungsbereich des Kanals 41 verlagert werden kann; der Zustrom durch den Kanal 41 in den ersten Druckraum 39 kann also durch den Kolben 29 nicht behindert werden. Der Außendurchmesser des Kolbens 29 ist so auf den Innendurchmesser der Ausnehmung 7 abgestimmt, daß die Außenfläche des Kolbens flüssigkeitsdicht beziehungsweise druckdicht an der Innenseite der Ausnehmung 7 anliegt. Der Kolben wirkt somit als Schieberventil.

In dem Bereich, in dem die Außenfläche des Kolbens 29 dichtend an der Innenfläche der Ausnehmung 7 anliegt, wenn der Kolben 29 an dem Anschlag 37 anliegt, mündet ein Kanal 75, der durch das Gehäuse 9 der hydraulischen Fördereinrichtung geführt ist und zum Ansaugbereich der Fördereinrichtung beziehungsweise Flügelzellenpumpe führt. Sowohl aus Figur 1 als auch aus Figur 2 ist ersichtlich, daß die Außenfläche des Kolbens 29 einen Dichtbereich zwischen dem in dem ersten Druckraum 39 mündenden Kanal 41 und dem in dem Abdichtbereich des Kolbens 29 mündenden Kanal 75 ergibt. Gleichzeitig ist die Länge des Dichtbereichs des Kolbens 29 so gewählt, daß dieser in den Figuren 1 und 2 dargestellten Position den Kanal 75 druckdicht gegenüber dem zweiten Druckraum 47 abschließt.

Die Druckbegrenzungsventile 5 gemäß Figur 1 beziehungsweise 105 gemäß Figur 2 sind so ausgebildet, daß die Öffnung 55 der Hülse 49 im Inneren des Hohlraums 45 angeordnet ist. Dabei ist die Hülse so ausgebildet, daß ihr Außendurchmesser kleiner ist als der Innendurchmesser des Kolbens 29 im Bereich des Hohlraums 45, so daß dieser auch dann in Fluidverbindung mit dem zweiten Druckraum 47 steht, wenn die Hülse 49 des Druckbegrenzungsventils 5 beziehungsweise 105 in das Innere des Hohlraums 45 hineinragt. Die Hülse 49 ragt nur ein relativ kurzes Stück in den Hohlraum 45 hinein, so daß der Kolben 29 sich gegen die Kraft der Schraubenfeder 5 nach links verlagern kann, ohne daß der Kolben 29 mit dem Boden 77 des Hohlraums 45 an die Stirnseite 79 der Hülse anschlägt.

Sobald jedoch der Kolben 29 sich entgegen der Druckkraft der Schraubenfeder 35 über eine gewisse Wegstrecke nach links bewegt hat, gibt die dichtende Außenfläche des Kolbens 29 den zum Ansaugbereich der Fördereinrichtung führenden Kanal 75 frei, so daß eine Fluidverbindung zwischen dem in den ersten Druckraum mündenden Kanal 41 und dem zum Ansaugraum der Fördereinrichtung führenden Kanal 75 gegeben ist.

Beiden Ausführungsbeispielen ist überdies gemeinsam, daß der im zweiten Druckraum 47 herrschende Druck über den den Verschlußstopfen 61 durchdringenden Durchgangskanal 63 auf den Verschlußkörper 59 wirkt, der von dem Widerlager 57 aufgrund der Druckkraft der Schraubenfeder 55 gegen die Mündung des Durchgangskanals 63 gepreßt wird. Steigt der Druck im zweiten Druckraum 47 und damit also im Hohlraum 45 so weit an, daß die Druckkraft der Schraubenfeder 55 überwunden wird, gibt der Verschlußkörper 59 die Mündung des Durchgangskanals 63 frei, so daß Öl aus dem zweiten Druckraum 47 durch den Durchgangskanal 63 um das Widerlager 57 herum in den dritten Druckraum 65 gelangen und von dort über die Öffnung 69 beziehungsweise den Stichkanal 169 in den Kanal 67 führen kann, der zum Tank der Fördereinrichtung führt.

Die Funktionsweise der hier beschriebenen Ventilanordnung entspricht letztlich der herkömmlichen Ventilanordnungen: das Stromregelventil dient dazu, den zum Verbraucher, das heißt, zum Lenkgetriebe abgegebenen Fluidstrom auf einen vorgebbaren Wert von beispielsweise 8 l/min zu begrenzen, auch wenn der im Kanal 41 und damit im ersten Druckraum 39 herrschende Druck ansteigt. Dies ist zum einen der Fall, wenn die Drehzahl der die hydraulische Fördereinrichtung antreibenden Brennkraftmaschine ansteigt und der von der Pumpe geförderte Fluidstrom ebenfalls zunimmt, insbesondere aber dann, wenn die Radkräfte zum Lenken, das heißt, die von der Umgebung auf das Rad wirkende Kräfte, zunehmen. Der im ersten Druckraum 39 zunehmende Druck führt dazu, daß der Kolben 29 des Stromregelventils 3 gegen die Druckkraft der Schraubenfeder 35 aus der in Figur 1 und 2 dargestellten Ausgangslage nach links verschoben wird, wobei auch der Dichtungsbereich des Kolbens 29 nach links wandert und der zwischen dem ersten Druckraum 39 und dem zum Ansaugbereich der Pumpe führenden Kanal 75 vorgegebene Abschluß schließlich freigegeben wird. Bei einer Verlagerung des Kolbens nach links ändert sich der Durchlaßquerschnitt der Öffnung 25, weil der Außendurchmesser des sich nach links verlagernden Dorns 27 zunimmt. Bei steigendem Druck im ersten Druckraum 39 sinkt daher durch die Verengung des Durchlasses zu dem Innenraum 43 der an den Verbraucher abgegebene Fluidstrom von beispielsweise ca. 8 l/min auf 4 l/min, auch wenn der Druck ansteigt, was zu einem strafferen Lenkgefühl bei hoher Drehzahl führt.

Der im Innenraum 43 herrschende Druck wird über die Blende 33 und den Durchgangskanal 33, der den Dorn 27 durchdringt, auf den Hohlraum 45 und damit auf den zweiten Druckraum 47 übertragen. Übersteigt der hier vorgegebene Druck einen vorbestimmten Wert beispielsweise 100 bis 110 bar, wird der Verschlußkörper 59 gegen die Kraft der auf das Widerlager 47 wirkenden Schraubenfeder 55 von der Mündung des Durchgangskanals 63 weggedrängt, so daß eine Fluidverbindung vom zweiten Druckraum 47 zum dritten Druckraum 65 gegeben ist, damit zu einem niedrigeren Druckniveau als im zweiten Druckraum 45, hier zum Tank der Fördereinrichtung beziehungsweise Lenkhilfpumpe. Dadurch steigt der Druck im zweiten Druckraum 47 hinter dem Kolben 29 nicht weiter an, so daß der Kolben 29 bei weiterem Druckanstieg im System, das heißt, im Verbraucher beziehungsweise im Lenksystem weiter nach links verschoben werden kann und zwar, durch die Einwirkung des im ersten Druckraums 39 herrschenden Drucks. Die dichtend an der Innenfläche der Ausnehmung 7 anliegende Außenfläche des Kolbens 29 gibt dadurch einen größeren Bereich der Mündung des Kanals 75 frei, so daß noch mehr Öl aus dem ersten Druckraum 39 in den Kanal 75 abströmen kann. Durch die Meßblende 33 wird ein zu großer Nachstrom von Fluid verhindert, so daß sich im zweiten Druckraum 47 aufgrund des Auslösens des Druckbegrenzungsventils 5 beziehungsweise 105 ein Druckgleichgewicht einstellen kann. Der Kolben 29 verharrt somit in seiner Regelposition stabil. Er wird bei weiter steigendem Systemdruck nach links verschoben, so daß mehr Öl in den Kanal 75 abströmen kann und ein weiterer Druckanstieg im System verhindert wird.

Dadurch, daß das auch als Druckpilot bezeichnete Druckbegrenzungsventil 5 beziehungsweise 105 durch den Kolben 29 hindurch, also durch den den Dorn 27 durchdringenden Durchgangskanal 31, mit dem im Innenraum 43 herrschenden beziehungsweise mit dem dem Verbraucher zugeführten Druck in Verbindung steht, kann der von der Fördereinrichtung abgegebene Druck optimal überwacht werden, ohne daß es zusätzlicher Verbindungskanäle im Gehäuse 9 der Fördereinrichtung bedürfte. Es zeigt sich auch, daß die unmittelbare Druckverbindung zum Druckbegrenzungsventil einfach und kostengünstig realisierbar ist, wobei der Aufbau der beiden Komponenten 5 beziehungsweise 105 und 3 der Ventilanordnung 1 sehr kompakt ist.

Der Kolben 29 des Stromregelventils 3 wird auf seiner einen Seite mit einem ersten Druckniveau, dem Druck in dem ersten Druckraum 39, und auf seiner zweiten Seite mit einem zweiten, niedrigerem Druckniveau, dem Druck im zweiten Druckraum 47, damit auch mit dem im Hohlraum 45 des Kolbens 29 herrschenden Druck beaufschlagt, wobei auch im zweiten Druckraum 47 gegebenenfalls ein hoher Druck herrschen kann. Dieser hohe Druck kann unmittelbar auf das Druckbegrenzungsventil 5 beziehungsweise 105 einwirken, ohne daß es zusätzlicher das Gehäuse 9 durchdringender Hochdruck-Kanalverbindungen bedürfte. Über das Druckbegrenzungsventil kann eine Verbindung zu einem dritten -gegenüber dem zweiten Druckniveau abgesenkten- Druckniveau freigegeben werden, beispielsweise zum Tank oder zum Ansaugbereich der Fördereinrichtung.

Es zeigt sich also, daß der Aufbau der Ventilanordnung sehr einfach und kostengünstig realisierbar ist. Durch die Trennung der beiden Komponenten der Ventilanordnung 1 beziehungsweise 100 ist ein einfacher Grundaufbau gegeben, wobei die Funktionssicherheit der Ventilanordnung bei geringem Raumbedarf voll erhalten bleibt.

Besonders hervorzuheben ist, daß durch die Trennung von Stromregelventil und Druckbegrenzungsventil das Stromregelventil besonders einfach aufgebaut sein kann, daß andererseits die ohnehin in das Gehäuse 9 der Fördereinrichtung einzubringende Ausnehmung 7 letztlich als Hochdruckverbindung zwischen Stromregelventil und Druckbegrenzungsventil verwendbar ist, so daß sich ein einfacher Aufbau sowohl der Ventilanordnung als auch der mit dieser zusammenwirkenden Fördereinrichtung realisierbar ist. Dabei spielt es vom Herstellungsaufwand nur eine untergeordnete Rolle, ob das Druckbegrenzungsventil gemäß Figur 1 in den Grund der als Sackloch ausgebildeten Bohrung eingebracht wird oder in einem Verschlußstopfen 71, der das zweite Ende der Durchgangsbohrung im Gehäuse 9 der Fördereinrichtung verschließt.

## Patentansprüche

1. Ventilanordnung (1) für eine hydraulische Fördereinrichtung, insbesondere für eine Lenkhilfpumpe, mit einem Stromregelventil (3) und Druckbegrenzungsventil (5), wobei das Stromregelventil (3) und das Druckbegrenzungsventil (5; 105) zwei getrennte Komponenten der Ventilanordnung (1) darstellen, wobei das Druckbegrenzungsventil (5) über einen Durchgangskanal (31) mit dem einem Verbraucher zugeführten Druck und letztlich auch mit einem ersten Druckraum (39) verbunden ist, der der Druckseite der Fördereinrichtung zugeordnet ist, wobei das Stromregelventil (3) einen Kolben (29) umfaßt, der einerseits mit dem Ausgangsdruck der hydraulischen Fördereinrichtung und andererseits mit dem dem Verbraucher zugeordneten Druck beaufschlagbar ist, und wobei bei einer druckbedingten Verlagerung des Kolbens (29) des Stromregelventils (3) eine in Abhängigkeit vom Druck variable Verbindung zwischen dem ersten Druckraum (39) und einem Kanal (75) geschaffen wird, der zum Ansaugbereich der Fördereinrichtung führt, wobei gleichzeitig der von der Fördereinrichtung geförderte Fluidstrom zum Verbraucher beziehungsweise zum Innenraum (43) druckabhängig geregelt wird, und dabei der dem Verbraucher zugeführte Druck von dem Druckbegrenzungsventil (5; 105) überwacht wird, dadurch gekennzeichnet, daß das Stromregelventil (3) und das Druckbegrenzungsventil (5; 105) in ein und derselben Ausnehmung (7) im Gehäuse (9) der hydraulischen Fördereinrichtung angeordnet sind.

2. Ventilanordnung nach Anspruch 1, **dadurch gekennzeichnet**, daß die Ausnehmung (7) als einseitig offene Bohrung (11) ausgebildet ist, in deren Grund (13) das Druckbegrenzungsventil (5) eingebracht ist, und die das Stromregelventil (3) aufnimmt.

3. Ventilanordnung nach Anspruch 1, **dadurch gekennzeichnet**, daß die Ausnehmung (7) als das Gehäuse (9) der Fördereinrichtung vollständig durchdringende Bohrung (110) ausgebildet ist und daß das Druckbegrenzungsventil (105) in einem die Bohrung (110) abschließenden Verschlußstopfen (71) untergebracht ist.

4. Ventilanordnung nach einem der vorhergehenden Ansprüche, **dadurch gekennzeichnet**, daß das Druckbegrenzungsventil (5; 105) über einen das Stromregelventil (3) durchdringenden Durchgangskanal (31) mit dem einem Verbraucher zugeführten Druck und letztlich auch mit einem ersten Druckraum (39) verbunden ist, der der Druckseite der Fördereinrichtung zugeordnet ist.

5. Ventilanordnung nach Anspruch 4, **dadurch gekennzeichnet**, daß der Durchgangskanal (31) mit einer definierten Durchmesserverengung (Blende (33)) versehen ist.

6. Ventilanordnung nach einem der vorhergehenden Ansprüche, **dadurch gekennzeichnet**, daß das Stromregelventil (3) einen in der Ausnehmung (7) gegen die Kraft eines Federelements (Schraubenfeder (35)) bewegbaren Kolben (29) aufweist, auf dessen erster Seite ein erstes Druckniveau (Verbraucher und/oder erster Druckraum (39)) und daß auf dessen zweiter, gegenüberliegenden Seite ein zweites, niedrigeres Druckniveau (Hohlraum (45) und zweiter Druckraum (47)) herrscht und das Druckbegrenzungsventil (5; 105) mit dem zweiten Druckniveau in Verbindung steht und so ausgebildet ist, daß bei Überschreiten eines vorgebbaren Druckwerts eine Verbindung zu einem noch niedrigeren dritten Druckniveau (dritte Druckkammer (65)) freigebbar ist.

7. Ventilanordnung nach einem der vorhergehenden Ansprüche, **dadurch gekennzeichnet**, daß sowohl das Stromregelventil (3) als auch das Druckbegrenzungsventil (5; 105) mit einem gemeinsamen Raum (zweiter Druckraum (47)) in unmittelbarer hydraulischer Verbindung stehen, in dem das zweite Druckniveau gegeben ist.

## Claims

1. A valve arrangement (1) for an hydraulic conveying device, in particular for a power-steering pump, having a flow regulating valve (3) and a pressure relief valve (5), the flow regulating valve (3) and the pressure relief valve (5; 105) constituting two separate components of the valve arrangement (1), the pressure relief valve (5) being connected via a through channel (31) to the pressure supplied to a consumer means and in the end also to a first pressure chamber (39) associated with the pressure side of the conveying device, the flow regulating valve (3) comprising a piston (29) which can be acted upon on the one hand by the output pressure of the hydraulic conveying device and on the other hand by the pressure associated with the consumer means, and a connection ― variable in dependence on the pressure ― being produced between the first pressure chamber (39) and a channel (75) in the event of a pressure-occasioned displacement of the piston (29) of the flow regulating valve (3), which channel (75) leads to the suction region of the conveying device, at the same time the fluid stream to the consumer means or to the inner chamber (43) conveyed by the conveying device being regulated in a pressure-dependent manner, and here the pressure supplied to the consumer means being monitored by the pressure relief valve (5: 105), characterised in that the flow regulating valve (3) and the pressure relief valve (5; 105) are arranged in one and the same cavity (7) in the housing (9) of the hydraulic conveying device.

2. A valve arrangement in accordance with Claim 1, characterised in that the cavity (7) is in the form of a bore (11) open at one end, the pressure relief valve (5) being placed in the bottom (13) of this bore (11), which bore (11) receives the flow regulating valve (3).

3. A valve arrangement in accordance with Claim 1, characterised in that the cavity (7) is in the form of a bore (110) passing right through the housing (9) of the conveying device, and in that the pressure relief valve (105) is housed in a stopper (71) closing the bore (110).

4. A valve arrangement in accordance with any one of the preceding Claims, characterised in that the pressure relief valve (5; 105) is connected via a through channel (31) passing through the flow regulating valve (3) to the pressure supplied to a consumer means and in the end also to a first pressure chamber (39) associated with the pressure side of the conveying device.

5. A valve arrangement in accordance with Claim 4, characterised in that the through channel (31) is provided with a defined diameter-constriction (orifice (33)).

6. A valve arrangement in accordance with any one of the preceding Claims, characterised in that the flow regulating valve (3) has a piston (29) movable in the cavity (7) against the force of a spring element (helical spring (35)), a first pressure level (consumer means and/or first pressure chamber (39)) prevailing at the first side of this piston (29), and in that a second, lower pressure level (hollow chamber (45) and second pressure chamber (47)) prevails at its second, opposite side, and the pressure relief valve (5; 105) is connected to the second pressure level and is such that a connection to an even lower, third pressure level (third pressure chamber (65)) can be opened when a predeterminable pressure value is exceeded.

7. A valve arrangement in accordance with any one of the preceding Claims, characterised in that both the flow regulating valve (3) and the pressure relief valve (5; 105) are hydraulically connected directly with a common chamber (second pressure chamber (47)) in which the second pressure level is produced.

## Revendications

1. Disposition de soupapes (1) pour un transporteur hydraulique, notamment pour une pompe pour aide directionnelle, comprenant une soupape de régulation du débit (3) et une soupape de limitation de la pression (5), sachant que la soupape de régulation du débit (3) et la soupape de limitation de la pression (5 ; 105) constituent deux composants distincts de la disposition de soupapes (1), sachant que la soupape de limitation de la pression (5) est reliée par un canal de passage (31) à la pression alimentant un consommateur et, enfin, à un premier espace de pression (39) qui est associé au côté de pression du transporteur, sachant que la soupape de régulation du débit (3) comprend un piston (29) qui peut être sollicité, d'une part, par la pression de sortie du transporteur hydraulique et, d'autre part, par la pression associée au consommateur, et sachant que, lors d'un déplacement du piston (29) de la soupape de régulation du débit (3) sous l'effet de la pression, il se crée une liaison variant en fonction de la pression entre le premier espace de pression (39) et un canal (75), ce dernier menant à la zone d'aspiration du transporteur, sachant qu'en même temps, le flux de fluide acheminé vers le consommateur ou plutôt vers l'espace intérieur (43) par le transporteur est réglé en fonction de la pression, à l'occasion de quoi la soupape de limitation de la pression (5 ; 105) surveille la pression alimentant le consommateur, caractérisée en ce que la soupape de régulation du débit (3) et la soupape de limitation de la pression (5 ; 105) sont logées dans un seul et même logement (7) dans le carter (9) du transporteur hydraulique.

2. Disposition de soupapes selon la revendication 1, caractérisée en ce que le logement (7) est réalisé en tant que perçage borgne (11) dans le fond (13) duquel est encastrée la soupape de limitation de la pression (5), et qui reçoit la soupape de régulation du débit (3).

3. Disposition de soupapes selon la revendication 1, caractérisée en ce que le logement (7) est réalisé en tant que perçage (110) traversant le carter (9) du transporteur de part en part, et en ce que la soupape de limitation de la pression (105) est logée dans un bouchon (71) fermant le perçage (110).

4. Disposition de soupapes selon l'une des revendications précédentes, caractérisée en ce que la soupape de limitation de la pression (5 ; 105) est reliée par un canal de passage (31) traversant la soupape de régulation du débit (3) à la pression alimentant un consommateur et, enfin, à un premier espace de pression (39) qui est associé au côté de pression du transporteur.

5. Disposition de soupapes selon la revendication 4, caractérisée en ce que le canal de passage (31) comporte un rétrécissement défini du diamètre (diaphragme (33)).

6. Disposition de soupapes selon l'une des revendications précédentes, caractérisée en ce que la soupape de régulation du débit (3) présente un piston (29) pouvant se déplacer dans le logement (7) contre la force d'un élément à ressort (ressort cylindrique de compression (35)), du premier côté duquel il règne un premier niveau de pression (consommateur et/ou premier espace de pression (39)) et du second côté duquel il règne un deuxième niveau de pression inférieur au précédent (espace vide (45) et deuxième espace de pression (47)), et en ce que la soupape de limitation de la pression (5 ; 105) est reliée au second niveau de pression et est réalisée de telle manière que, lorsqu'une valeur de pression pouvant être préalablement fixée est dépassée, il soit possible d'établir une liaison avec un troisième niveau de pression encore plus bas (troisième chambre de pression (65)).

7. Disposition de soupapes selon l'une des revendications précédentes, caractérisée en ce que tant la soupape de régulation du débit (3) que la soupape de limitation de la pression (5 ; 105) présentent une liaison hydraulique directe avec un espace commun (deuxième espace de pression (47)) où règne le deuxième niveau de pression.
